Europäisches Patentamt

(19) European Patent Office

Office européen des brevets

(11) Veröffentlichungsnummer: **0 042 546**
**B1**

(12) # EUROPÄISCHE PATENTSCHRIFT

(45) Veröffentlichungstag der Patentschrift:
16.01.85

(51) Int. Cl.⁴: **G 01 P 3/64**, G 01 P 3/68

(21) Anmeldenummer: 81104484.1

(22) Anmeldetag: 11.06.81

(54) Geschwindigkeitsmessystem, insbesondere für Strassenfahrzeuge.

(30) Priorität: 14.06.80 DE 3022356

(43) Veröffentlichungstag der Anmeldung:
30.12.81 Patentblatt 81/52

(45) Bekanntmachung des Hinweises auf die Patenterteilung:
16.01.85 Patentblatt 85/3

(84) Benannte Vertragsstaaten:
BE CH DE FR GB LI LU NL SE

(56) Entgegenhaltungen:
DE - C - 555 590
US - A - 4 180 726

RADIO MENTOR ELECTRONIC, Band 44, Nr. 1, (1978)
MÜNCHEN (DE) "Doppellichtschranke prüft
Verkehrsradar", Seiten 019, 020
INSTRUMENTS AND EXPERIMENTAL TECHNIQUES,
Band 19, Nr. 3, Teil 2 (1976) NEW YORK (US) S. Yu.
CHERNYAVSKII "Equipment used along a ballistic path
to measure velocity of flying models and for
synchronisation"

(73) Patentinhaber: Fischer, Reinhold, Rembrandtweg 5,
D-7996 Meckenbeuren (DE)
Patentinhaber: Münz, Erwin, Domänenstrasse 51,
D-7992 Tettnang (DE)

(72) Erfinder: Fischer, Reinhold, Rembrandtweg 5,
D-7996 Meckenbeuren (DE)
Erfinder: Münz, Erwin, Domänenstrasse 44,
D-7992 Tettnang 1 (DE)
Erfinder: Beermann, Walter, Tannenweg 4,
D-7992 Tettnang 1 (DE)
Erfinder: Reinsch, Horst Dieter, Ing. grad., Appenweiler,
D-7990 Friedrichshafen 5 (DE)

(74) Vertreter: Eisele, Eberhard, Dipl.-Ing. et al,
Patentanwälte Eisele & Dr. Otten Goetheplatz 7,
D-7980 Ravensburg (DE)

# Beschreibung

Die Erfindung betrifft ein System zur Messung der Geschwindigkeit eines bewegten Objekts, mit drei hintereinander in Bewegungsrichtung des Objekts angeordneten Schranken, welche zwei Messbasen begrenzen und jeweils ein Signal abgeben, wenn sie vom Objekt passiert werden, und mit einer von den Signalen beaufschlagten Ausweteschaltung zur Ermittlung der Geschwindigkeit des Objekts anhand wenigstens eines der zur Durchquerung der beiden Messbasen erforderlichen Zeitintervalle.

Ein Geschwindigkeitsmesssystem dieser Art ist aus der Patentschrift US-A-4 180 726 bekannt. Eine der beschriebenen Anwendungen dieses Systems ist die Messung der Geschwindigkeit und Beschleunigung eines Golfschlägers. Die beiden gleich grossen Messbasen dienen dazu, zwei Zeitintervalle zu gewinnen, die bei gleichförmiger Geschwindigkeit des Golfschlägers theoretisch gleich gross sein müssen. Durch Vergleich der beiden Zeitintervalle kann somit festgestellt werden, ob der Schläger beschleunigt oder verzögert wurde.

Die Erfindung befasst sich mit der Geschwindigkeitsmessung von quasi gleichförmig bewegten Objekten, insbesondere Fahrzeugen im Strassenverkehr. Bei diesen Messungen treten häufig Störungen durch Fremdobjekte auf, z.B. überholende Fahrzeuge, Vögel, Hunde, aber auch Laubblätter und Schneeflocken, welche während der Messung zufällig eine der Schranken beeinflussen.

Eine Doppelmessung über zwei Messbasen nach Art der US-A-4 180 726 und ein Vergleich der beiden unabhängig gewonnenen Zeitintervalle führt jedoch nicht weiter. Praktisch sind auch bei gleichförmiger Geschwindigkeit des Messobjektes und bei Ausschluss von Störungen die beiden Zeitintervalle nicht exakt gleich gross, sondern es müssen gewisse systembedingte Fehlertoleranzen zugelassen werden. Das bedeutet aber, dass das Anzeigekriterium für eine Störung von der Geschwindigkeit des gemessenen Objekts stark abhängt. Eine für schnellfahrende Fahrzeuge fest eingestellte Toleranzgrenze würde bei langsamfahrenden Fahrzeugen zu einer Störungsanzeige führen, obwohl gar keine Störung vorhanden ist.

Der Erfindung liegt die Aufgabe zugrunde, unabhängig von der Grösse der gemessenen Geschwindigkeit Störungen durch Fremdobjekte zu erfassen.

Diese Aufgabe wird ausgehend von einem Geschwindigkeitsmesssystem der einleitend bezeichneten Art erfindungsgemäss dadurch gelöst, dass die Ausweteschaltung die im kennzeichnenden Teil des Anspruchs 1 angegebenen vier Einrichtungen enthält.

Dieser Vorschlag beruht darauf, dass nicht nur die Differenz der beiden unabhängigen Zeitmessungen gewonnen wird, sondern dass der Absolutwert dieser Differenz mit einem vorgegebenen Bruchteil eines der ermittelten Zeitintervalle verglichen wird. Dadurch lässt sich der Einfluss der Messgeschwindigkeit auf den Absolutwert kompensieren. Es hat sich gezeigt, dass eine Fehlertoleranz von 3% nach oben und unten zur Berücksichtigung der systematischen Fehler genügt, d.h. eine darüber hinausgehende Differenz der beiden verglichenen Zeitintervalle (Absolutwert und Bruchteil) als Kriterium für die Beteiligung eines fremden Objekts genommen werden kann.

Das Messsystem kontrolliert sich somit selbst und dies ist der Grund dafür, dass die selbsttätigen Messungen in verkehrsgerichtlichen Verfahren Beweiswert haben. Dies auch dann, wenn wegen ungünstiger örtlicher Umstände die Schranken sich nicht im Bildfeld der Kamera befinden.

Wichtig ist auch, dass der Kontrollvorgang in einer früheren Stufe des gesamten Auswertprozesses stattfindet. Es werden Zeiten, nicht Geschwindigkeiten verglichen. Dies vereinfacht das System. Nur eine der beiden gemessenen Zeiten wird in einem anschliessenden Quotientenrechner letztlich zu einem Geschwindigkeitsanzeigewert weiterverarbeitet.

Zur Erhöhung der Messgenauigkeit bei gleichzeitiger Verkürzung der gesamten Schrankenanordnung in Bewegungsrichtung wird vorgeschlagen, dass jeder Messbasis ein Zählimpulsgeber zugeordnet ist und dass deren Pulsfrequenzen umgekehrt proportional zu den Längen der betreffenden Messbasen sind. Auf diese Weise können die Schrankenabstände auch unterschiedlich sein und vor allem ist es möglich, dass die eine Messbasis sich von der ersten zur zweiten und die andere Messbasis sich von der ersten zur dritten Schranke erstreckt. In jedem Fall wird man die kürzere Basis als Kontrollbasis und die grössere als Rechenbasis zur Errechnung der Geschwindigkeit verwenden.

Bei Messungen an Strassen mit Gegenverkehr kann es vorkommen, dass eine Begegnung von zwei Fahrzeugen kurz vor oder nach der Schrankenanordnung stattfindet, ohne die Messung zu beeinflussen. Wenn dann auf der automatisch ausgelösten Fotografie beide Fahrzeuge zu erkennen sind, stellt sich die Frage, welchem der Fahrzeuge die gemessene Geschwindigkeit zuzuordnen ist. Es wird deshalb vorgeschlagen, dass eine Einrichtung zur Bildung von Verkehrsrichtungssignalen vorgesehen ist und eine Einrichtung zur gemeinsamen Anzeige der gemessenen Geschwindigkeit und des Verkehrsrichtungssignals.

Als Schranken eignen sich kapazitiv wirkende Einrichtungen, Induktionsschleifen, Lasersysteme, elektromagnetische Strahler und Lichtschranken. Besonders kurze Schrankenfolgeabstände von 25 cm können ohne gegenseitige Störung bei 30 m Abstand zwischen Sender und Empfänger (erfassbare Strassenbreite) dadurch erreicht werden, dass als Schranken Infrarot-Lichtschranken vorgesehen sind und dass aus den abgestrahlten Lichtkegeln der Infrarot-Leuchtdioden dieser Schranken mittels je einer Schlitzblende Lichtbänder ausgeschnitten werden, die einander mit den Breitseiten zugewendet sind. Auch die Lichtempfänger haben parallel zu den Lichtwerferschlitzen verlaufende Schlitze.

Ein Ausführungsbeispiel der Erfindung wird nachfolgend anhand der Zeichnung erläutert. Im einzelnen zeigt

Fig. 1 ein vereinfachtes Blockschaltbild eines Geschwindigkeitsmesssystems für Strassenfahrzeuge und

Fig. 2 eine zusätzliche Schaltanordnung zur Gewinnung eines Verkehrsrichtungssignals.

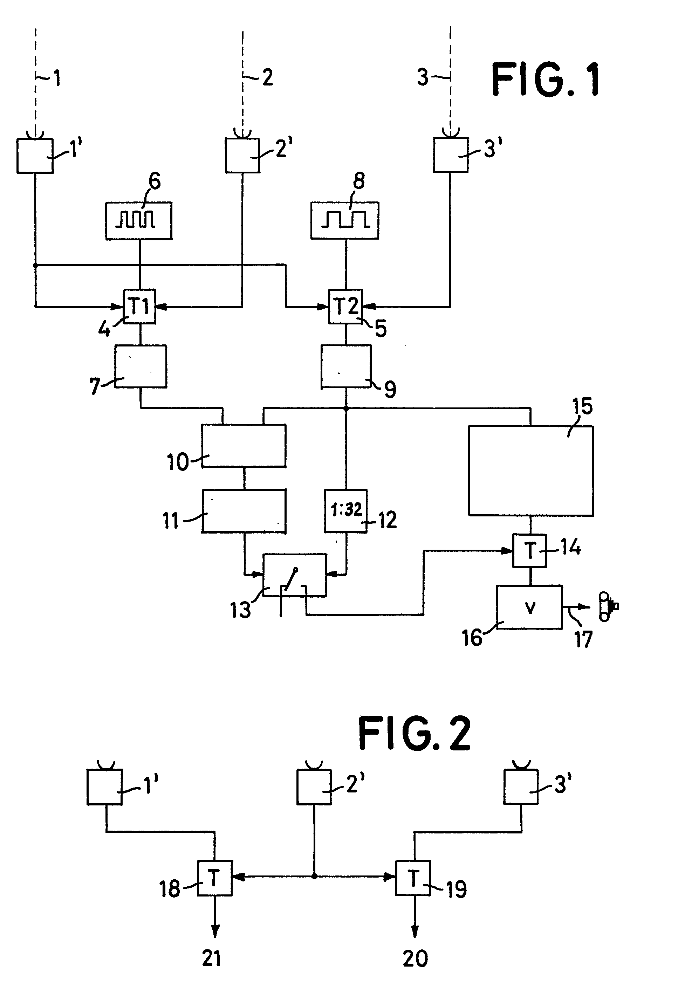

In Fig. 1 sind drei Strahlen 1, 2 und 3 zu erkennen. Es handelt sich um Strahlenbündel etwa rechteckigen, wesentlich höheren als breiteren Querschnitts, die aus nicht dargestellten Infrarot-Gleichlicht-Strahlern stammen und in einer Höhe von etwa 50 cm mit gegenseitigem Abstand von 25 cm horizontal quer über eine Fahrbahn gerichtet sind. Bei einer Strassenbreite von 30 m erreichen diese bandförmigen Strahlenbündel eine Breite von etwa 15 cm.

Die Strahlen treffen jeweils auf Empfänger 1', 2' und 3', die mit Impulsgebern kombiniert sind und bei Unterbrechung des betreffenden Strahles einen Impuls abgeben. Der Impuls des Empfängers 1' öffnet zwei Tore 4 und 5. Das Tor 4 wird vom Impuls des Empfängers 2' und das Tor 5 vom Impuls des Empfängers 3' wieder geschlossen. Über Tor 4 laufen Impulse eines 72 kHz-Oszillators 6 auf einen Kontrollzähler 7. Entsprechend gelangen Impulse eines 36 kHz-Oszillators 8 über Tor 5 auf einen Rechenzähler 9. Ein Subtrahierer 10 bildet die Differenz der Zählwerte, die wegen der unterschiedlichen Oszillatorfrequenzen normalerweise gleich gross sind. In einem Absolutwertbildner 11 wird das Vorzeichen der Differenz unterdrückt. Der Zählwert des Rechenzählers 9 wird ausserdem in einem fest verdrahteten Teiler 12 durch den Faktor 32 geteilt. Die Ausgänge des Absolutwertbildners 11 und des Teilers 12 liegen an einem Vergleicher 13, der ein Tor 14 öffnet, wenn der Absolutwert kleiner als der erwähnte Zählwert-Bruchteil, d.h. wenn die Differenz der beiden Messzeiten kleiner als etwa 3% der sogenannten Rechenzeit ist.

Der Wert des Zählers 9 gibt diese Rechenzeit an, welche ein Fahrzeug braucht, um die Rechenbasis, d.h. die Abstandsstrecke von Strahl 1 zu Strahl 3, zu durchfahren. Die Rechenzeit wird einem an sich bekannten Geschwindigkeitsrechner 15 (Quotientenrechner) zugeführt, dessen Ausgangswert über das Tor 14 zu einer Geschwindigkeitsanzeige 16 gelangt. Von dort wird ein Signal 17 zum Auslösen einer Kamera gegeben, welche sowohl das Anzeigegerät als auch die Fahrbahn vor und/oder nach der Lichtschrankenanordnung im Blickfeld hat.

Aus der beschriebenen Darstellung ergibt sich ohne weiteres, dass die Werte der Zähler 7 und 9 nur dann gleich sind bzw. ihre Differenz innerhalb des geringen Toleranzbereichs liegt, wenn die drei Lichtschranken in fortlaufender Reihenfolge von einem Fahrzeug beeinflusst werden, das sich mit gleichbleibender Geschwindigkeit von links nach rechts bewegt. Würde beispielsweise der Strahl 3 unterbrochen, solange sich die Fahrzeugvorderkante zwischen der ersten und zweiten Lichtschranke befindet, so wäre das Ergebnis des Zählers 9 sehr viel geringer als das des anderen Zählers 7. Auch wenn der Strahl 2 oder der Strahl 3 von einem fremden Objekt unterbrochen wird, ganz gleich, wo sich die Fahrzeugkante zwischen der ersten und dritten Lichtschranke befindet, müssen die Zählergebnisse unterschiedlich ausfallen. Das hat immer zur Folge, dass das Tor 14 nicht geöffnet wird und somit weder eine Anzeige erfolgt, noch die Kamera ausgelöst wird. Letzteres hat überdies den Vorteil, dass Filmmaterial gespart wird.

Der besseren Verständlichkeit wegen zeigt Fig. 1 nicht, dass dieses Geschwindigkeitsmesssystem auch bei entgegengesetzter Fahrtrichtung – von rechts nach links – funktioniert. Es wird auf elektronischem Wege erreicht, dass der Impuls des Empfängers 3', sofern er von allen drei Impulsen zuerst kommt, die Tore 4 und 5 öffnet, anstatt Tor 5 zu schliessen. Dies übernimmt in diesem Fall der Impuls des Empfängers 1'. Ansonsten bleibt alles gleich.

Die zusätzliche Anordnung nach Fig. 2 dient als Ergänzung einer solchen in beiden Fahrtrichtungen betreibbaren Messanordnung. Die Impulse der Empfänger 1' und 3' laufen über Tore 18 und 19, welche normalerweise geschlossen sind und vom Impuls des Empfängers 2' geöffnet werden. Man erkennt, dass bei Fahrtrichtung von links nach rechts der zuerst erscheinende Impuls des Empfängers 1' auf ein geschlossenes Tor trifft, während der Impuls des Empfängers 3' über das inzwischen geöffnete Tor 19 am Ausgang 20 erscheint. Er betätigt eine Anzeige «rechts». Im anderen Fall betätigt der zuletzt am Ausgang 21 erscheinende Impuls des Empfängers 1' eine Anzeige «links».

1 Infrarotstrahl
2 Infrarotstrahl
3 Infrarotstrahl
1' Empfänger
2' Empfänger
3' Empfänger
4 Tor $T_1$
5 Tor $T_2$
6 72 kHz-Oszillator
7 Kontrollzähler
8 36 kHz-Oszillator
9 Rechenzähler
10 Subtrahierer
11 Absolutwertbildner
12 Teiler
13 Vergleicher
14 Tor
15 Geschwindigkeitsrechner
16 Geschwindigkeitsanzeige
17 Leitung
18 Tor
19 Tor
20 Signal «rechts»
21 Signal «links»

**Patentansprüche**

1. System zur Messung der Geschwindigkeit eines bewegten Objekts, mit drei hintereinander in Bewegungsrichtung des Objekts angeordneten Schranken (1, 2, 3), welche zwei Messbasen begrenzen und jeweils ein Signal abgeben, wenn sie vom Objekt passiert werden, und mit einer von den Signalen beaufschlagten Auswerteschaltung zur Ermittlung der Geschwindigkeit des Objekts anhand wenigstens eines der zur Durchquerung der beiden Messbasen erforderlichen Zeitintervalle, dadurch gekennzeichnet, dass die Auswerteschaltung folgende Bestandteile enthält:

– Einrichtungen (11) zur Ermittlung des Absolutwerts der Differenz der vom Objekt für das Passieren der beiden Messbasen benötigten Zeitintervalle,

– Einrichtungen (12) zur Ermittlung eines vorgegebenen Bruchteils (1:32) eines der ermittelten Zeitintervalle,

– Einrichtungen (13) zum Vergleich des Absolutwerts mit dem Bruchteil (1:32), sowie

– Einrichtungen (13, 14, 16) zur Bewertung des für eine der Messbasen erhaltenen Geschwindigkeitswertes in Abhängigkeit vom Ergebnis des Vergleichs.

2. Geschwindigkeitsmesssystem nach Anspruch 1, dadurch gekennzeichnet, dass jeder Messbasis ein Zählimpulsgeber (6, 8) zugeordnet ist und dass deren Pulsfrequenzen umgekehrt proportional zu den Längen der betreffenden Messbasen sind.

3. Geschwindigkeitsmesssystem nach Anspruch 2, dadurch gekennzeichnet, dass die eine Messbasis sich von der ersten (1) zur zweiten (2) und die andere Messbasis sich von der ersten (1) zur dritten Schranke (3) erstreckt.

4. Geschwindigkeitsmesssystem nach Anspruch 1, dadurch gekennzeichnet, dass eine Einrichtung zur Bildung von Verkehrsrichtungssignalen (20, 21) vorgesehen ist und eine Einrichtung (16) zur gemeinsamen Anzeige der gemessenen Geschwindigkeit und des Verkehrsrichtungssignals.

5. Geschwindigkeitsmesssystem nach Anspruch 1, dadurch gekennzeichnet, dass als Schranken Infrarot-Lichtschranken vorgesehen sind und dass aus den abgestrahlten Lichtkegeln der Infrarot-Leuchtdioden dieser Schranken mittels je einer Schlitzblende Lichtbänder ausgeschnitten werden, die einander mit den Breitseiten zugewendet sind.

**Claims**

1. System for measuring the speed of a moving object, with three barriers 1, 2, 3, which are situated in succession to one another in the direction of the movement of the object and which delimit two measuring bases and in each case emit a signal when the object passes them, and with an evaluation circuit subjected to the action of the signals and serving to determine the speed of the object by means of at least one of the time intervals required for the passage through the two measuring bases, characterized by the fact that the evaluation circuit contains the following integral parts:

– Devices 11 for determining the absolute value of the difference between the time intervals required for passing the respective two measuring bases.

– Devices 12 for determining a preselected fraction (1:32) of one of the time intervals determined.

– Devices 13 for comparing the absolute value with the fraction (1:32), and also

– Devices 13, 14, 16 for determining, in accordance with the result of the comparison, the speed value obtained for one of the measuring bases.

2. Speed measuring system in accordance with Claim 1, characterized by the fact that a counting pulse transmitter 6, 8, is associated with each measuring basis and that its pulse frequencies are in inverse proportion to the lengths of the measuring basis concerned.

3. Speed measuring system in accordance with Claim 2, characterized by the fact that one measuring basis extends from the first barrier 1 to the second barrier 2 and the other measuring basis from the first barrier 1 to the third barrier 3.

4. Speed measuring system in accordance with Claim 1, characterized by the fact that a device for the formation of traffic direction signals 20, 21, is provided, and also a device 16 for joint display of the speed measured and of the traffic direction signal.

5. Speed measuring system in accordance with Claim 1, characterized by the fact that the barriers consist of infra-red light barriers and that by means of a slit diaphragm in each case bands of light facing towards one another by their wide sides are cut out of the reflected light cones of the infra-red luminous diodes of the said barriers.

**Revendications**

1. Système pour la mesure de la vitesse d'un objet mobile, comportant trois barrières (1, 2, 3) agencées l'une derrière l'autre dans le sens de déplacement de l'objet, ces barrières délimitant deux bases de mesure et délivrant un signal à chaque fois qu'elles sont passées par un objet, ledit système comportant de plus un dispositif recevant lesdits signaux et déterminant la vitesse de l'objet au moyen d'au moins un intervalle de temps nécessaire à la traversée des deux bases de mesure, caractérisé en ce que ledit dispositif comporte les composants suivants:

– des dispositifs (11) pour déterminer la valeur absolue de la différence des intervalles de temps nécessaires à l'objet pour passer les deux bases de mesure;

– des dispositifs (12) pour déterminer une fraction prédéterminée (1:32) d'un des intervalles de temps obtenus;

– des dispositifs (13) pour comparer la valeur absolue avec ladite fraction (1:32), ainsi que;

– des dispositifs (13, 14 et 16) pour évaluer la vitesse obtenue pour l'une des bases de mesure en fonction du résultat de la comparaison.

2. Système selon la revendication 1, caractérisé en ce qu'à chaque base de mesure est associé un générateur d'impulsions de comptage (6, 8) et en ce que les fréquences d'impulsions de ces générateurs sont inversement proportionnelles aux longueurs des bases de mesure correspondantes.

3. Système selon la revendication 2, caractérisé en ce qu'une base de mesure s'étend de la première (1) à la seconde (2) barrière lumineuse et en ce que l'autre base de temps s'étend de la première (1) à la troisième (3) barrière lumineuse.

4. Système selon la revendication 1, caractérisé en ce qu'on prévoit un dispositif pour la formation de signaux de sens de circulation (20, 21) et un dispositif (16) pour l'affichage commun de la vitesse mesurée et du signal de direction de trafic.

5. Système selon la revendication 1, caractérisé en ce que l'on utilise des barrières lumineuses infrarouges et en ce que dans les cônes lumineux rayonnés des diodes infrarouges de ces barrières, on découpe des bandes lumineuses à chaque fois au moyen d'un écran à fentes, lesdites bandes étant tournées l'une vers l'autre par leurs côtés les plus larges.

**FIG. 1**

**FIG. 2**